# EUROPEAN PATENT SPECIFICATION

(11) **EP 1 867 886 B1**
(45) Date of publication and mention of the grant of the patent: **21.05.2014**
(21) Application number: 07252421.8
(22) Date of filing: 14.06.2007
(51) Int. Cl.: F16D 13/72

(54) **Clutch housing**
Kupplungsgehäuse
Carter d'embrayage

(30) Priority: 15.06.2006 JP 2006166711
(43) Date of publication of application: 19.12.2007
(73) Proprietor: TOYOTA JIDOSHA KABUSHIKI KAISHA, Toyota-shi, Aichi-ken, 471-8571 (JP)
(72) Inventor: Matuura, Keitarou c/o Toyota Jidosha Kabushiki Kaisha, Aichi-ken, 471-8571 (JP); Hamano, Hideo c/o Toyota Jidosha Kabushiki Kaisha, Aichi-ken, 471-8571 (JP); Matsumura, Masao c/o Toyota Jidosha Kabushiki Kaisha, Aichi-ken, 471-8571 (JP); Takeshita, Keiji c/o Toyota Jidosha Kabushiki Kaisha, Aichi-ken, 471-8571 (JP)
(74) Representative: Albutt, Anthony John

(56) References cited:
- DE-A1- 3 619 774
- DE-A1- 10 215 168
- DE-A1- 19 716 473
- JP-A- 59 219 527

## Description

### BACKGROUND OF THE INVENTION

### 1. Field of the Invention

The invention relates generally to a clutch housing that houses a clutch mechanism which is disposed between an engine and a transmission and which permits or shuts off transfer of power generated by the engine to the transmission and a release mechanism which is used to operate the clutch mechanism, and that has a vent port in the upper portion of its outer peripheral wall. More specifically, the invention relates to a clutch housing structured to prevent adhesion of foreign matters entering the clutch housing through the vent port to a sliding portion of a cylindrical retainer portion, on which a release bearing of the release mechanism slides.

### 2. Description of the Related Art

A vehicle clutch mechanism is disposed between an engine and a transmission, and permits or shuts off transfer of power generated by the engine to the transmission. The clutch mechanism is operated through a release mechanism by a driver or according to a command made by an electronic control unit.

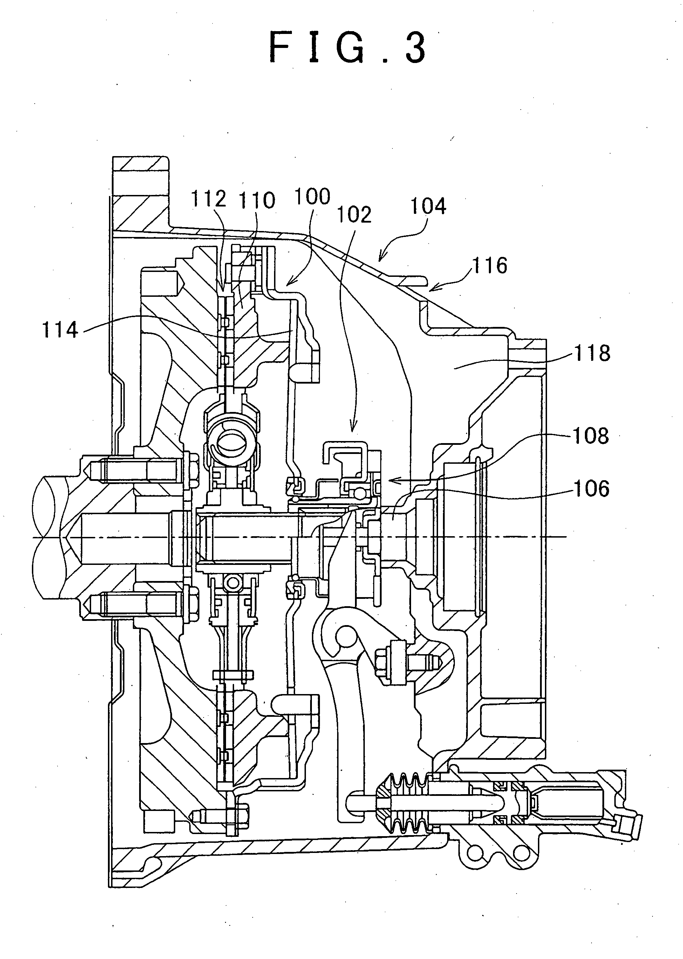

FIG. 3 is the sectional view of a conventional clutch housing 104. The bowl-shaped clutch housing 104 houses a clutch mechanism 100 and a release mechanism 102. A release bearing 108 is fitted on the outer peripheral face of a cylindrical retainer portion 106 so as to be slidable in the direction in which the axis of the clutch housing 104 extends (hereinafter, simply referred to as the "axial direction"). The cylindrical retainer portion 106 extends from a transmission-side (right-side in FIG. 3) partition wall of the clutch housing 104 toward the engine (to the left in FIG. 3) in the axial direction. The release mechanism 102 moves the release bearing 108 in the axial direction in response to a depression of a clutch pedal (not shown). When the release bearing 108 is moved toward the transmission (to the right in FIG. 3), a diaphragm spring 114, which presses a pressure plate 110 of the clutch mechanism 100 against a clutch disc 112 by its elastic force, is moved together with the release bearing 108 toward the transmission. As a result, the clutch disc 112 is disengaged.

When the clutch mechanism 100 is engaged, the difference in rotational speed between the output shaft of the engine and the input shaft of the transmission is absorbed using friction of the clutch disc 112. In order to efficiently reduce the friction heat generated at this time, a vent port 116, through which the outside air is sucked into the clutch housing 104, is formed in the upper portion of the outer peripheral wall of the clutch housing 104. As the outside air is sucked into the clutch housing 104 through the vent port 116, foreign matters such as muddy water and dust may also enter the clutch housing 104 with the air. If the muddy water adheres to reinforcement ribs 118 formed to reinforce the rigidity of the clutch housing 104, the muddy water flows along the wall faces of the reinforcement ribs 118 and easily reaches a sliding portion of the retainer portion 106, on which the release bearing 108 slides. Adhesion of the foreign matters such as muddy water and dust to the sliding portion may lower the performance of the release bearing 108 and interfere with the operation of the clutch mechanism 100.

To counter this problem, for example, a clutch housing described in Japanese Patent Application Publication No. 10-252775 (JP-A-10-252775) is provided with a boss portion that covers an outside air feed port (which corresponds to a vent port according to the present invention) formed in the clutch housing such that entry of foreign matters such as muddy water and dust into the clutch housing is suppressed.

However, according to the conventional technologies such as the technology described in Japanese Patent Application Publication No. 10-252775 (JP-A-10-252775), the entry of foreign matters in a liquid state (e.g. muddy water) into the clutch housing is suppressed to some extent. However, because the outside air feed port is exposed to the outside air, it is impossible to completely block the entry of the foreign matters in a liquid state into the clutch housing, and it is difficult to block the entry of dust in the air into the clutch housing.

German Patent Application DE 3619774 discloses a device for cooling an externally controlled friction clutch with air conveying blades arranged on a clutch pressure plate. The air conveying blades draw in cooling air through an air inlet opening in the clutch housing from a point outside the clutch housing and discharge it outward through an outlet opening in the clutch housing.

### SUMMARY OF THE INVENTION

The invention provides a clutch housing structured to prevent adhesion of foreign matters such as muddy water and dust entering the clutch housing through a vent port of the clutch housing to a sliding portion on which a release bearing slides.

An aspect of the invention relates to a clutch housing that includes an annular outer peripheral wall whose upper portion has a vent port, and a partition wall that closes the open end of the outer peripheral wall, and that houses a clutch mechanism and a release mechanism. The clutch mechanism may be disposed between an engine and a transmission, and permits or shuts off transfer of power generated by the engine to the transmission. The release mechanism is slidably supported on a cylindrical portion extending from the partition wall so as to surround an input shaft of the transmission, which passes through the partition wall. The release mechanism is used to operate the clutch mechanism. The clutch housing further includes a foreign matter preventing member provided between the vent port and the release mechanism so as to prevent a foreign matter entering the clutch housing through the vent port from reaching a sliding portion of the cylindrical portion, on which a release bearing provided in the release mechanism slides. The clutch housing also includes a plurality of reinforcement ribs formed on an inner face of the outer peripheral wall and extending radially from positions in the outer peripheral wall which are substantially above the release mechanism towards an inner periphery of the partition wall. At least one of the reinforcement ribs is provided in proximity to the vent hole.

The clutch mechanism according to the first aspect of the invention is easily cooled, because the outside air is sucked into the clutch housing through the vent port formed in the upper portion of the outer peripheral wall. In addition, provision of the foreign matter preventing member prevents the foreign matter entering together with the outside air sucked into the clutch housing through the vent port from reaching the sliding portion on which the release bearing slides.

According to the invention, the foreign matter preventing member continuously extends from the partition wall so as to cover the sliding portion on which the release bearing slides. The foreign matter preventing member has a hood-shaped cross section taken along the plane perpendicular to the direction in which the release bearing slides. The width of a lower portion of the opening defined by the cross section of the foreign matter preventing member is greater, in at least one position, than the width of an upper portion of the opening.

In the first aspect of the invention, the foreign matter preventing member may be provided at the upper portion of the partition wall.

In the first aspect of the invention, the foreign matter preventing member may be provided between the inner periphery of the reinforcement ribs and the sliding portion on which the release bearing slides.

### BRIEF DESCRIPTION OF THE DRAWINGS

The foregoing and further objects, features and advantages of the invention will become apparent from the following description of preferred embodiments with reference to the accompanying drawings, wherein the same or corresponding portions are denoted by the same reference numerals and wherein:
FIG. 1 is the sectional view of a clutch housing that houses a clutch mechanism and a release mechanism according to a first embodiment of the invention;
FIG. 2 is the sectional view of a clutch housing that houses a clutch mechanism and a release mechanism according to an example of clutch housing;
FIG. 3 is a sectional view of a conventional clutch housing that houses a clutch mechanism and a release mechanism;
FIG 4A is a sectional view of a release bearing protection member, taken along the plane perpendicular to the axial direction, according to the first embodiment of the invention;
FIG. 4B is a sectional view of a release bearing protection member, taken along the plane perpendicular to the axial direction, according to a modified embodiment of the invention; and
FIG. 4C is a sectional view of a release bearing protection member, taken along the plane perpendicular to the axial direction, according to another modified embodiment of the invention.

### DETAILED DESCRIPTION OF THE EXAMPLE EMBODIMENTS

Example embodiments of the invention will be described in detail with reference to the accompanying drawings.

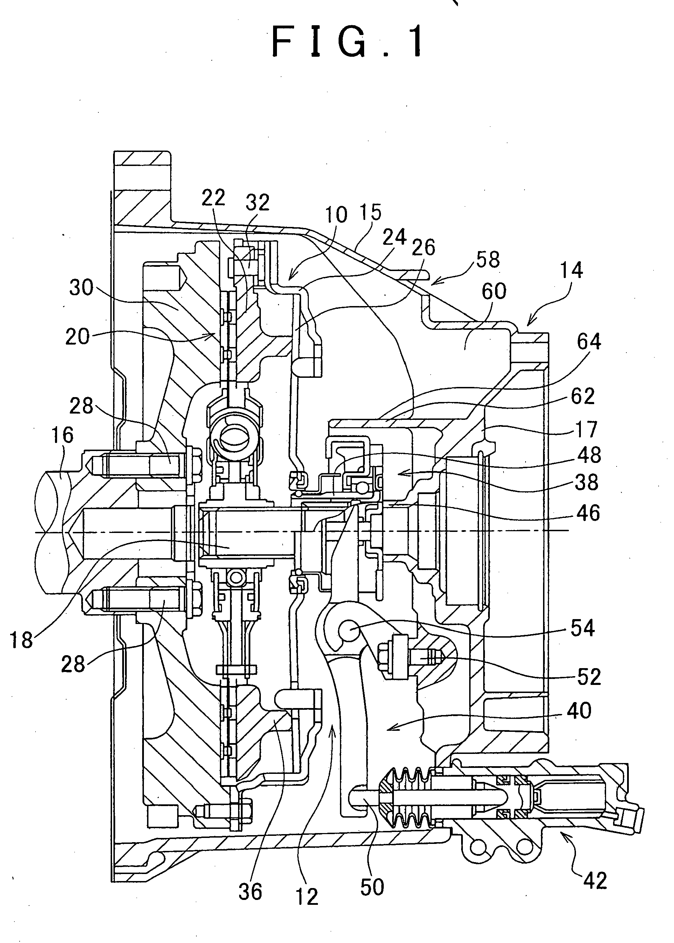

FIG. 1 is the sectional view of a clutch housing 14 that houses a clutch mechanism 10 and a release mechanism 12 according to a first embodiment of the invention. The clutch housing 14 has the clutch mechanism 12 disposed between an engine (not shown) and a transmission (not shown), and has an annular outer peripheral wall 15 and a partition wall 17 that closes the one side open end of the outer peripheral wall 15. Although not shown in FIG. 1, an engine, which outputs power to a crankshaft 16, and a transmission are connected to the clutch housing 14. The clutch housing 14 is connected, at its crankshaft 16 side-portion, to the engine, and is connected, at its portion opposite to the crankshaft 16, to the transmission.

The clutch mechanism 10 permits or shuts off transfer of power generated by the engine to the transmission. The clutch mechanism 10 is a pull-type clutch mechanism, and includes a clutch disc 20, a pressure plate 22, a clutch cover 24, and a diaphragm spring 26. The clutch disc 20 is splined to an input shaft 18 of the transmission such that the clutch disc 20 does not rotate with respect to the input shaft 18. The pressure plate 22 pushes the clutch disc 20 in the axial direction. The diaphragm spring 26 pushes the pressure plate 22 toward the clutch disc 20.

The crankshaft 16 is connected to a disc-shaped flywheel 30 with a plurality of bolts 28, and rotates together with the flywheel 30. The clutch disc 20 is sandwiched between the flywheel 30 and the pressure plate 22 in the axial direction. The clutch cover 24 is connected to the pressure plate 22 with a plurality of rivets 32 provided in the outer peripheral portion of the pressure plate 22.

The clutch cover 24 has a stepped portion which forms a corner portion, and the outer periphery of the diaphragm spring 26 abuts against the corner portion. The inner periphery of the diaphragm spring 26 is connected to a release bearing 38 of a release mechanism 12, which will be described later in detail, such that the diaphragm spring 26 does not move with respect to the release bearing 38 in the axial direction. The diaphragm spring 26 abuts against a protrusion portion 36 that protrudes from the face of the pressure plate 22. The diaphragm spring 26 pushes, by its elastic force, the protrusion portion 36 using the outer periphery of the diaphragm spring 26 as the fulcrum. The diaphragm spring 26 thus moves the pressure plate 22 toward the crankshaft 16, that is, the diaphragm spring 26 causes the pressure plate 22 to press the clutch disc 20. In this way, the clutch disc 20 is engaged with the flywheel 30. As a result, the rotation of the crankshaft 16 is transferred to the input shaft 18 of the transmission (not shown).

The release mechanism 12 is slidably supported on a cylindrical retainer portion 46 that extends from the partition wall 17 so as to surround the input shaft 18 that passes through the partition wall 17. The release mechanism 12 is used to operate the clutch mechanism 10. The release mechanism 12 includes the release bearing 38, a release fork 40, and a release cylinder 42. The release bearing 38 moves the diaphragm spring 26 in the axial direction. The first end of the release fork 40 is connected to the release bearing 38. The tip of the release cylinder 42 abuts against the second end of the release fork 40.

The cylindrical retainer portion 46 extends toward the crankshaft 16 in the axial direction from the inner periphery of the partition wall 17 of the clutch housing 14, which is located on the transmission side. The release bearing 38 is slidably fitted on the outer peripheral face of the cylindrical retainer portion 46. The inner periphery of the diaphragm spring 26 is connected to the end portion of an inner race 48 of the release bearing 38 such that the diaphragm spring 26 is immovable with respect to the release bearing 38 in the axial direction but is rotatable with respect to the release bearing 38.

The release fork 40 is connected, at the first end, to the release bearing 38, and the abuts, at the second end, against the end of a push rod 50 of the release cylinder 42, which will be described later in detail. The release fork 40 is supported so as to be pivotal about a fork supporting portion 54. The fork supporting portion 54 is fixed to the partition wall 17 with a bolt 52. When the release fork 40 pivots clockwise in FIG. 1, the first-end-side portion of the release fork 40 pivots toward the transmission (to the right in FIG. 1), and the release bearing 38 is accordingly moved toward the transmission. The diaphragm spring 26 is moved, against its spring force, toward the transmission in accordance with the movement of the release bearing 38 toward the transmission. The movement of the diaphragm spring 26 also moves the pressure plate 22 toward the transmission via the clutch cover 24. In this way, the pressure plate 22 is disengaged from the clutch disc 20. As a result, power transfer between the crankshaft 16 and the transmission (not shown) is shut off.

In the release cylinder 42, a hydraulic pressure is generated in response to a depression of a clutch pedal (not shown) and moves the push rod 50 in the axial direction. In this way, the end of the push rod 50 pushes the second end of the release fork 40, whereby the release fork 40 pivots.

A vent port 58 is formed in the upper portion of the outer peripheral wall 15 of the clutch housing 14. The outside air is sucked through the vent port 58 into the clutch housing 14 in order to reduce the friction heat generated in the clutch mechanism 10 disposed in the clutch housing 14. A plurality of reinforcement ribs 60 is formed on the inner face of the outer peripheral wall 15. The reinforcement ribs 60 extend radially from the positions in the outer peripheral wall 15, which are substantially above the release mechanism 12, toward the inner periphery of the partition wall 17. At least one of the reinforcement ribs 60 is provided in proximity to the vent port 58. An exhaust port (not shown) is formed in the outer peripheral wall 15 of the clutch housing 14, at a position near the flywheel 30. The air in an axle case 11 (not shown) is discharged by a centrifugal airflow created by the rotation of the flywheel 30. In this way, a negative pressure is generated in the axle case 11, and therefore the outside air is sucked into the clutch housing 14 through the vent port 58.

A release bearing protection member 62 is provided at the upper portion of the partition wall 17. The release bearing protection member 62 extends, in the direction in which the release bearing 38 slides (in the axial direction), from the partition wall 17 of the clutch housing 14 to the point which is reached by the engine-side end of the release bearing 38 when the release bearing 38 is moved to the maximum extent. The release bearing protection member 62 is a member having a continuous inverse U-shaped cross section taken along the plane perpendicular to the axial direction. The release bearing protection member 62 is provided above the release bearing 38 with a certain distance maintained therebetween to cover a sliding portion of the retainer portion 46. The release bearing 38 slides on the sliding portion of the retainer portion 46 (hereinafter, simply referred to as the "sliding portion" where appropriate). The release bearing protection member 62 is provided so as not to contact the release fork 40. The release bearing protection member 62 is formed integrally with the partition wall 17 by, for example, aluminum casting. Note that, the release bearing protection member 62 according to the first embodiment of the invention functions as foreign matter preventing means according to the invention.

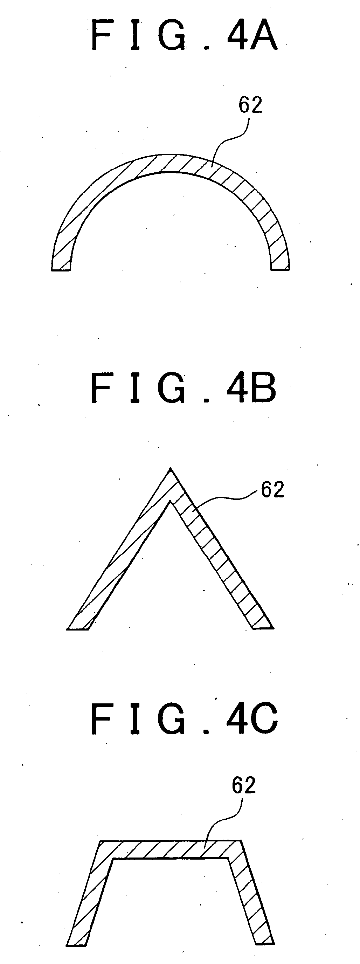

Foreign matters such as muddy water and dust may enter the thus structured clutch housing 14 through the vent port 58 as the air is sucked therein. If the muddy water adheres to reinforcement ribs 60 located on the upper side in the clutch housing 14, the muddy water flows down along the reinforcement ribs 60 toward the sliding portion which is located close to the inner periphery of the partition wall 17. However, the release bearing protection member 62 prevents the muddy water from reaching the sliding portion of the retainer portion 46, on which the release bearing 38 slides. More detailed description will be provided below. The muddy water reaches an outer peripheral face 64 of the release bearing protection member 62 after flowing down along the reinforcement ribs 60, under its own weight, toward the inner periphery of the partition wall 17. Because the release bearing protection member 62 is formed in a shape having an inverse U-shaped cross section taken along the plane perpendicular to the axial direction as shown in FIG. 4A, the muddy water flows along the curved outer peripheral face 64 of the release bearing protection member 62. After reaching the lower ends of the outer peripheral face 64, the muddy water flows down toward the bottom of the clutch housing 14 under its own weight. In this way, the release bearing protection member 62 prevents the foreign matters such as muddy water from reaching the sliding portion of the retainer portion 46, on which the release bearing 38 slides. In addition, because the release bearing 38 is covered by the release bearing protection member 62, adhesion of dust entering the clutch housing 14 through the vent port 58 to the sliding portion is suppressed.

According to the first embodiment of the invention described above, because the outside air is sucked in the clutch housing 14 through the vent port 58 formed in the upper portion of the outer peripheral wall 15, the clutch mechanism 10 is easily cooled. In addition, provision of the release bearing protection member 62 prevents adhesion of the foreign matters such as muddy water and dust entering the clutch housing 14 along with the air through the vent port 58 to the sliding portion on which the release bearing 38 slides.

According to the first embodiment of the invention, the release bearing protection member 62 extends from the partition wall 17 in substantially parallel to the direction in which the release bearing 38 slides. The release bearing protection member 62 has a continuous inverse U-shaped cross section taken along the plane perpendicular to the axial direction. Also, the release bearing protection member 62 is formed so as not contact the release fork 40. The release bearing protection member 62 covers the release bearing 38. Therefore, adhesion of foreign matters entering the clutch housing 14 through the vent port 58 to the sliding portion is prevented. As a result, the performance of the release mechanism 12 is prevented from being lowered.

Next, a further example of a clutch housing will be described. Note that, in the description of the second embodiment below, the same components as those in the first embodiment are denoted by the same reference numerals, and descriptions thereof will be omitted.

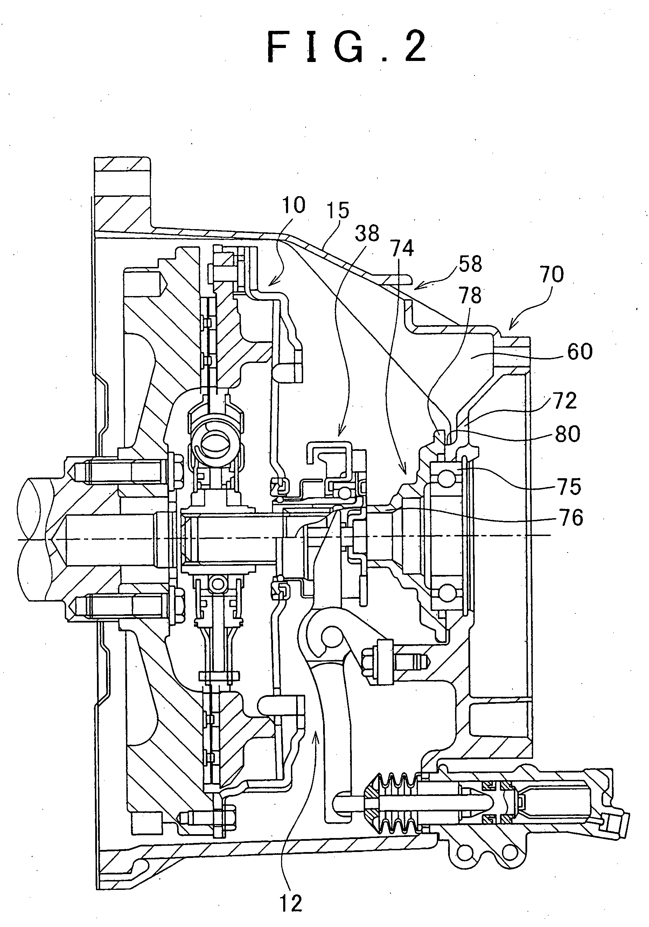

FIG. 2 is the sectional view showing a clutch housing 70 that houses the clutch mechanism 10 and the release mechanism 12 according to the further example. The constructions and operations of the clutch mechanism 10 and the release mechanism 12 according to the second embodiment are the same as those in the first embodiment, and therefore the descriptions thereof will not be repeated.

One end of a cylindrical release bearing supporting member 74 is connected to the inner periphery of a partition wall 72 of the clutch housing 70 according to the second embodiment of the invention. The release bearing supporting member 74 supports the release bearing 38. The release bearing supporting member 74 is made of, for example, cast iron, and formed separately from the partition wall 72. The base end portion (the partition wall-side end portion) of the release bearing supporting member 74 is fitted onto a bearing 75 fitted to the inner periphery of the partition wall 72 such that the axis of the release bearing supporting member 74 coincides with the axis of the bearing 75. The release bearing supporting member 74 is fixed to the partition wall 72 with, for example, a bolt (not shown). The other end portion of the release bearing supporting member 74 is cylindrically shaped (hereinafter, referred to as a "cylindrical portion 76") so as to slidably support the release bearing 38. In addition, the base end portion of the release bearing supporting member 74 is provided with an annular flange portion 78 that protrudes outward in the radial direction. With this structure, an annular groove 80 is defined between the flange portion 78 and the inner peripheral portion of the partition wall 72. The reinforcement ribs 60 extend radially from the positions in the outer peripheral wall 15, which are substantially above the release mechanism 12, toward the inner periphery of the partition wall 17. At least one of the reinforcement ribs 60 is provided in proximity to the vent port 58. The flange portion 78 is provided between the inner periphery of the reinforcement ribs 60 and the sliding portion on which the release bearing 38 slides. The outer periphery of the flange portion 78 is further outward than the inner periphery of the reinforcement ribs 60 in the radial direction so that the annular groove 80 is formed. Note that, the flange portion 78 according to the second embodiment of the invention functions as a foreign matter preventing member according to the invention, and the annular groove 80 functions as a groove according to the invention.

Foreign matters such as muddy water enter the clutch housing 70 having the structure described above through the vent port 58 along with the air. After adhering to the reinforcement ribs 60 located on the upper side in the clutch housing 70, the muddy water flows down along the reinforcement ribs 60 toward the inner periphery of the partition wall 72. After reaching the inner periphery of the reinforcement ribs 60, the muddy water is guided into the annular groove 80 defined between the flange portion 78 and the inner peripheral portion of the partition wall 72, and then flows down toward the bottom of the clutch housing 14 along the annular groove 80. That is, the clutch housing 70 is structured such that the muddy water that flows down along the reinforcement ribs 60 is prevented from reaching the sliding portion on which the release bearing 38 slides.

According to the example described above, the base end portion of the release bearing supporting member 74 is provided with the flange portion 78, and the annular groove 80 is defined between the flange portion 78 and the partition wall 72. Therefore, the foreign matters entering the clutch housing 70 runs off along the annular groove 80, and are prevented from reaching the sliding portion on which the release bearing 38 slides. As a result, the performance of the release mechanism 12 is prevented from being lowered.

Further, because the release bearing supporting member 74 is formed separately from the clutch housing 70, the release bearing supporting member 74 is easily formed.

While the invention has been described with reference to the example embodiments thereof, it should be understood that the invention may be realized in other embodiments.

A pull-type clutch is employed as the clutch mechanism 10 according to the aforementioned embodiments. However, the invention may be applied to a push-type clutch, and moreover, the invention may be applied to any types of clutches provided with a release bearing and a sliding portion on which the release bearing slides.

The release bearing protection member 62 according to the first embodiment is a member that has an inverse U-shaped cross section. Alternatively, the release bearing protection member 62 may be formed in a substantially cylindrical shape so as to surround almost the entirety of the release bearing 38, and the arc defined by the cross section of the release bearing protection member 62 that surrounds the release bearing 38 may be in any length, as long as the release bearing protection member 62 does not interfere with operation of the release fork 40. Further, the shape of the cross section of the release bearing protection member 62 need not be annular. The cross section of the release bearing protection member 62 may be in any shape, as long as the width of the lower portion of the opening, defined by the cross section of the release bearing protection member 62, is greater than the width of the upper portion of the opening, as shown in FIGS. 4B and 4C. For example, a release bearing protection member having a triangular cross section may be employed as the release bearing protection member 62.

The release bearing protection member 62 according to the first embodiment of the invention extends from the partition wall 17 in substantially parallel to the direction in which the release bearing 38 slides. Alternatively, the release bearing protection member 62 may be sloped such that one end on the partition wall 17 side is lower than the other end.

The release bearing protection member 62 according to the first embodiment of the invention is formed integrally with the clutch housing 14 by aluminum casting. However, the release bearing protection member 62 need not be formed integrally with the clutch housing 14. The release bearing protection member 62 may be formed separately from the clutch housing 14, and fixed to the clutch housing 14 with, for example, bolts.

The release bearing protection member 62 according to the first embodiment of the invention extends in the axial direction from the partition wall 17 of the clutch housing 14 to the point which is reached by the engine-side-end of the release bearing 38 when the release bearing 38 is moved to the maximum extent. However, the release bearing protection member 62 may be in any length as long as the release bearing protection member 62 does not interfere with the operation of the diaphragm spring 26.

The flange portion 78 according to the second example is perfectly annular. However, the shape of the flange portion 78 need not be annular. For example, the flange portion 78 may be formed in an annular shape with its lower portion omitted. According to the second embodiment of the invention, the groove defined between the flange portion 78 and the inner peripheral portion of the partition wall 72 is circularly annular. However, the groove need not be circularly annular. The groove may be formed in any shape as long as the foreign matters runs off along the groove toward the bottom of the clutch housing 70. For example, a pentagonally-shaped groove may be formed.

While the invention has been described with reference to the example embodiments thereof, it is to be understood that the invention is not limited to the example embodiments or constructions. To the contrary, the invention is intended to cover various modifications arrangements made based on the knowledge of persons skilled in the art.

## Claims

1. A clutch housing (14, 70) that includes an annular outer peripheral wall whose upper portion has a vent port, and a partition wall (17, 72) that closes an open end of the outer peripheral wall, and that houses a clutch mechanism (10) and a release mechanism (12), wherein the clutch mechanism is suitable to be disposed between an engine and a transmission and permits or shuts off transfer of power generated by the engine to the transmission, and the release mechanism is slidably supported on a cylindrical portion extending from the partition wall so as to surround an input shaft of the transmission, which passes through the partition wall, and the release mechanism being used to operate the clutch mechanism, the clutch housing comprising a plurality of reinforcement ribs (60) formed on an inner face of the outer peripheral wall (15) and extending radially from positions in the outer peripheral wall which are substantially above the release mechanism towards an inner periphery of the partition wall (17); at least one of the reinforcement ribs (60) being provided in proximity to the vent port, the clutch housing **characterized by** comprising:
a foreign matter preventing member (62) provided between the vent port and the release mechanism so as to prevent a foreign matter entering the clutch housing through the vent hole from reaching a sliding portion of the cylindrical portion, on which a release bearing provided in the release mechanism slides,
wherein
the foreign matter preventing member (62) continuously extends from the partition wall (17) so as to cover the sliding portion on which the release bearing (38) slides, the foreign matter preventing member (62) has a hood-shaped cross section taken along a plane perpendicular to a direction in which the release bearing slides, and a width of a lower portion of an opening defined by the cross section of the foreign matter preventing member is greater, in at least one position, than a width of an upper portion of the opening, wherein the upper portion of the opening is located at an outer side in the radial direction of the clutch housing then the lower portion of the opening.

2. The clutch housing according to claim 1, wherein the foreign matter preventing member (62) is provided at the upper portion of the partition wall (17).

3. The clutch housing according to claim 1, wherein the foreign matter preventing member is provided between the inner periphery of the reinforcement ribs (60) and the sliding portion on which the release bearing slides.

## Patentansprüche

1. Ein Kupplungsgehäuse (14, 70) hat eine ringförmige äußere Umfangswand, deren oberer Abschnitt eine Lüftungsöffnung hat, und eine Trennwand (17, 72), die ein offenes Ende der äußeren Umfangswand verschließt, und einen Kupplungsmechanismus (10) sowie einen Ausrückmechanismus (12) aufnimmt, wobei der Kupplungsmechanismus geeignet ist zwischen einer Antriebsmaschine und einem Getriebe angeordnet zu sein und eine Übertragung von Leistung, die von der Antriebsmaschine erzeugt ist, zu dem Getriebe zulässt, oder diese unterbindet, und wobei der Ausrückmechanismus gleitend auf einem zylindrischen Abschnitt abgestützt ist, der sich aus der Trennwand erstreckt, die Eingangswelle des Getriebes umschließend, die durch die Trennwand durchtritt, und wobei der Ausrückmechanismus verwendbar ist, um den Kupplungsmechanismus zu betätigen,
wobei das Kupplungsgehäuse eine Vielzahl von Verstärkungsrippen (60) hat, die auf der Innenseite der äußerten Umfangswand (15) ausgebildet sind und sich radial von Stellen auf der äußeren Umfangswand, die sich im Wesentlichen über dem Ausrückmechanismus befinden, in Richtung auf einen inneren Umfang der Trennwand (17) erstrecken; wobei mindestens eine der Verstärkungsrippen (60) in der Nähe der Lüftungsöffnung ausgebildet ist, wobei das Kupplungsgehäuse **dadurch gekennzeichnet ist, dass** es
ein Fremdkörperschutzglied (62), das zwischen der Lüftungsöffnung und dem Ausrückmechanismus vorgesehen ist, um Fremdkörper, die in das Kupplungsgehäuse durch die Lüftungsöffnung eindringen, daran zu hindern, den Gleitabschnitt des zylindrischen Abschnitts zu erreichen, auf dem ein in dem Ausrückmechanismus vorgesehenes Ausrücklager gleitet, aufweist, wobei
sich das Fremdkörperschutzglied (62) kontinuierlich von der Trennwand (17), den Gleitabschnitt, auf dem das Ausrücklager (38) gleitet, abdeckend erstreckt, wobei das Fremdkörperschutzglied (62) einen in einer Schnittansicht entlang einer Ebene, die senkrecht zu einer Richtung ist, in der das Ausrücklager gleitet, kappenförmig ist, und eine Breite eines unteren Abschnitts einer Öffnung, die durch den Querschnitt des Fremdkörperschutzglieds begrenzt ist, an mindestens einer Stelle größer ist, als die Breite eines oberen Abschnitts der Öffnung, wobei der obere Abschnitt der Öffnung an einer in radialer Richtung des Kupplungsgehäuses weiter außen gelegenen Seite ist, als der untere Abschnitt der Öffnung.

2. Das Kupplungsgehäuse nach Anspruch 1, wobei das Fremdkörperschutzglied (62) am oberen Abschnitt der Trennwand (17) vorgesehen ist.

3. Das Kupplungsgehäuse nach Anspruch 1, wobei das Fremdkörperschutzglied zwischen dem inneren Umfang der Verstärkungsrippen (60) und dem Gleitabschnitt, auf dem das Ausrücklager gleitet, vorgesehen ist.

## Revendications

1. Carter d'embrayage (14, 70) comportant une paroi périphérique annulaire extérieure dont la portion supérieure présente un orifice de ventilation, et une paroi de cloisonnement (17, 72) qui ferme une extrémité ouverte de la paroi périphérique extérieure, et qui reçoit un mécanisme d'embrayage (10) et un mécanisme de libération (12), le mécanisme d'embrayage étant apte à être disposé entre un moteur et une transmission et permettant ou empêchant le transfert de puissance générée par le moteur à la transmission, et le mécanisme de libération étant supporté de manière coulissante sur une portion cylindrique s'étendant depuis la paroi de cloisonnement de manière à entourer un arbre d'entrée de la transmission, qui passe à travers la paroi de cloisonnement, et le mécanisme de libération étant utilisé pour actionner le mécanisme d'embrayage, le carter d'embrayage comprenant une pluralité de nervures de renforcement (60) formées sur une face interne de la paroi périphérique extérieure (15) et s'étendant radialement depuis des positions dans la paroi périphérique extérieure qui sont sensiblement au-dessus du mécanisme de libération vers une périphérie interne de la paroi de cloisonnement (17) ; au moins l'une des nervures de renforcement (60) étant prévue à proximité de l'orifice de ventilation, le carter d'embrayage étant **caractérisé en ce qu'**il comprend :
un organe de blocage de corps étrangers (62) prévu entre l'orifice de ventilation et le mécanisme de libération pour empêcher que des corps étrangers ayant pénétré dans le carter d'embrayage à travers l'orifice de ventilation n'atteignent une portion de coulissement de la portion cylindrique, sur laquelle glisse un palier de libération prévu dans le mécanisme de libération,
l'organe de blocage de corps étrangers (62) s'étendant en continu depuis la paroi de cloisonnement (17) de manière à couvrir la portion de coulissement sur laquelle glisse le palier de libération (38), l'organe de blocage de corps étrangers (62) ayant une section transversale en forme de capot suivant un plan perpendiculaire à une direction dans laquelle glisse le palier de libération, et une largeur d'une portion inférieure d'une ouverture définie par la section transversale de l'organe de blocage de corps étrangers étant supérieure, dans au moins une position, à une largeur d'une portion supérieure de l'ouverture, la portion supérieure de l'ouverture étant située au niveau d'un côté extérieur dans la direction radiale du carter d'embrayage par rapport à la portion inférieure de l'ouverture.

2. Carter d'embrayage selon la revendication 1, dans lequel l'organe de blocage de corps étrangers (62) est prévu au niveau de la portion supérieure de la paroi de cloisonnement (17).

3. Carter d'embrayage selon la revendication 1, dans lequel l'organe de blocage de corps étrangers est prévu entre la périphérie interne des nervures de renforcement (60) et la portion de coulissement sur laquelle glisse le palier de libération.
